# EUROPÄISCHE PATENTSCHRIFT

(11) **EP 1 737 713 B1**
(45) Veröffentlichungstag und Bekanntmachung des Hinweises auf die Patenterteilung: **16.04.2008**
(21) Anmeldenummer: 05732346.1
(22) Anmeldetag: 18.04.2005
(51) Int. Cl.: B60R 25/04

(54) **VORRICHTUNG ZUM STARTEN EINES FAHRZEUGMOTORS MITTELS EINES ELEKTRONISCHEN SCHLÜSSELS UND EIN DAZU ZU VERWENDENDER SCHLÜSSEL**
MECHANISM FOR STARTING A VEHICLE ENGINE BY MEANS OF AN ELECTRONIC KEY, AND KEY TO BE USED THEREFOR
DISPOSITIF DE DEMARRAGE D'UN MOTEUR DE VEHICULE AU MOYEN D'UNE CLE ELECTRONIQUE, ET CLE UTILISEE A CET EFFET

(30) Priorität: 21.04.2004 DE 102004019919
(43) Veröffentlichungstag der Anmeldung: 03.01.2007
(73) Patentinhaber: Huf Hülsbeck & Fürst GmbH & Co. KG, 42551 Velbert (DE)
(72) Erfinder: SCHINDLER, Mirko, 42549 Velbert (DE)
(86) Internationale Anmeldenummer: PCT/EP2005/004098
(87) Internationale Veröffentlichungsnummer: WO 2005/102798

(56) Entgegenhaltungen:
- EP-A- 1 279 576
- DE-A1- 19 747 732
- DE-A1- 19 939 733
- FR-A- 2 814 417
- US-B1- 6 460 386

## Beschreibung

Die Erfindung betrifft eine Vorrichtung zum Starten eines Fahrzeugmotors mittels eines elektrischen Schlüssels, mit einer zum Einstecken des Schlüssels dienenden Aufnahme im Fahrzeug, wobei der in der Aufnahme eingesteckte Schlüssel unverdrehbar und mindestens in eine definierte Hublage längsverschiebbar ist, wobei die Schlüsselhublage von Sensoren einer Steuereinheit überwacht und zur Steuerung von verschiedenen Funktionen des Motors genutzt werden und der Schlüssel in einer bestimmten Hublage mittels Sperrelemente, die durch einen elektrischen Antrieb gesteuert werden, gegen Entnahme aus der Aufnahme gesichert ist.
Des Weiteren betrifft die Erfindung einen elektronischen Schlüssel zur Verwendung in einer solchen Aufnahme.

Aus der DE 199 39 733 A1 ist eine solche gattungsgemässe Vorrichtung bekannt wobei der elektronische Schlüssel mittels einer Mechanik und einem damit verbundenen Hubmagneten in der Vorrichtung gegen Entnahme blockiert wird.
In der blockierten Stellung kann der Motor über Start-Stop-Taster gestartet oder ausgeschaltet werden. Dabei ist der Schlüssel weitestgehend in der Aufnahme versenkt. Durch Antippen des Schlüssels wird dieser in eine Hublage überführt die eine Entnahme mit der Hand ermöglicht. Dies ist jedoch nur möglich, wenn die magnetische Sperre die Hubbewegung freigibt.

Ähnliches ist aus der DE 197 47 732 C2 entnehmbar, bei der eine unerlaubte Entnahme des Schlüssels mittels einer elektromagnetischen Verriegelung verhindert wird.

Die EP 1 279 576 A2 offenbart eine Schlüsselaufnahme, deren Raststift, der in einer herzförmigen Rastkurve geführt ist. Durch Einschieben des Schlüssels in die Endposition wird der Stift in die Freigabebahn geschoben, die Schlüsselaufnahme kann dann in die Entnahmeposition gleiten. Zur Verhinderung der unerlaubten Entnahme des Schlüssels, wird die Rastkurve mittels eines Drehriegels, der von einem elektromagnetischen Antrieb bewegt wird, blockiert, so dass die verschiebliche Schlüsselaufnahme nicht in die Entnahmeposition gelangt.

Die WO 2004/087470 A1 offenbart ebenso eine Aufnahme für einen elektronischen Schlüssel, wobei der Schlüssel verschiedene Positionen in dem Aufnahmeschacht einnehmen kann, um verschiedene Steuerungsfunktionen auszulösen. Dieser wird ebenso durch eine elektrische Steuerung und entsprechender mechanischer Sperre gegen unerlaubte Entnahme blockiert. Erst bei einer definierten Positionseinnahme im Schacht gibt die Steuerung den Schlüssel zu Entnahme frei.

Die FR 2 814 417 A1 zeigt eine Aufnahme eines scheckkartenförmigen elektronischen Schlüssels, wobei dieser Schlüssel mittels eines Drehhebels in einer Position blockiert und gegen Entnahme gesichert ist. Mittels eines Tasters wird die Karte zur Entnahme freigegeben. Zur Verhinderung der Entnahme während der Fahrt, wird der Drehhebel alternativ mittels eines elektromagnetischen Stellelementes oder einer elektromotorischen Stellelementes an eine Freigabebewegung gehindert.

Nachteilig ist bei all diesen Anordnungen, dass bei Versagen des Hubmagneten oder bei Stromausfall im gesamten Fahrzeug, die elektromagnetischen Sperren bzw. elektrischen Sperrantriebe die Sperre nicht freigeben und somit der Schlüssel nicht entnehmbar ist.

Der vorliegenden Erfindung liegt somit die Aufgabe zugrunde eine Entnahme des elektronischen Schlüssels zu ermöglichen, auch wenn der Entsperrantrieb defekt ist oder mangels Energie im Fahrzeug nicht mehr funktioniert.

Diese Aufgabe wird durch die im Patentanspruch 1 aufgeführten Merkmale gelöst.

Die Vorrichtung zeichnet sich dadurch aus, daß die Vorrichtung Mittel aufweist, die eine Entnahme des elektronischen Schlüssels bei Ausfall des elektrischen Antriebes ermöglichen.

Durch diese Mittel kann der elektrische Antrieb selbst oder der durch den elektrischen Antrieb betätigte Hebel, der die Sperre betätigt, in seine Entsperrposition bewegt werden.

Vorzugsweise ist vorgesehen, dass das durch den elektrischen Antrieb betätigte Sperrelement einen Hebel und / oder Betätigungsflächen aufweist, auf die ein durch eine Ausnehmung des elektronischen Schlüssels geführtes Betätigungselement bei Betätigung im Notfall wirkt, so dass mit diesem Element das Sperrelement manuell in eine Entsperrposition bewegt werden kann.
Da eine Ausnehmung im elektronischen Schlüssel zur Durchführung eines Betätigungselementes genutzt wird, entfällt eine aufwendige Vorrichtung außerhalb der Vorrichtung.

Vorzugsweise ist vorgesehen, dass ein Start-Stop-Taster mit der Aufnahme für den elektrischen Schlüssel eine Baueinheit bildet.

Vorzugsweise ist vorgesehen, dass der elektrische Antrieb zur Aktivierung/Deaktivierung des Schlüsselsperrelementes ein Hubmagnet ist.
Alternativ kann der elektrische Antrieb in einer vorteilhaften Gestaltung ein Elektromotor sein.

Vorzugsweise ist vorgesehen, dass der in der Aufnahme eingesteckte elektronische Schlüssel mindestens zwischen zwei zueinander axial versetzte Hublagen längsverschiebbar ist, wobei die unterschiedlichen Schlüsselhublagen von Sensoren einer Steuereinheit überwacht und zur Steuerung von verschiedenen Funktionen des Motors oder des Fahrzeuges genutzt werden.

Dadurch können vielfältige Steuerungen durch Betätigung des elektronischen Schlüssels gesteuert werden, wie z.B. der Motorstart an sich oder das Einschalten anderer Verbraucher wie das Radio.

Vorzugsweise ist vorgesehen, dass das Betätigungselement zur Notbetätigung ein drahtförmiges Teil ist.
Damit steht ein einfaches, in der Not auch aus einem einfachen Draht oder einer Büroklammer herstellbares Teil, zur Verfügung, um den Notmechanismus zu aktivieren.

Vorzugsweise ist vorgesehen, dass ein elektronischer Schlüssel zur Verwendung in dieser Vorrichtung vorgesehen ist, wobei der Schlüssel in Einschubrichtung eine durchgehende Ausnehmung aufweist zur Durchführung oder Aufnahme eines Betätigungselementes.

Eine weitere vorteilhafte Ausgestaltung der Erfindung zeichnet sich dadurch aus, dass die Ausnehmung im elektronischen Schlüssel trichterförmig in eine Bohrung mündet, so daß das durchzuführende drahtförmige Betätigungselement zentriert durch die Bohrung geführt werden kann, um das Sperrelement in die Entsperrposition zu bewegen.
Dadurch kann jedweder Draht in die Ausführung eingeführt werden und wird dann automatisch auf das zu betätigende Element in der Vorrichtung geführt.

In einer weiteren vorteilhaften Ausbildung wird der Aufnahmeschacht des Notschlüssels im elektronischen Schlüssel als Ausnehmung zur Durchführung des Betätigungselementes genutzt.
Dadurch vereinfacht sich die Konstruktion des elektronischen Schlüssels, was gerade bei Massenfertigung eine große Rolle spielt.

In einer alternative Ausgestaltung ist vorgesehen, dass ein Stift, entgegengesetzt zur Einschubrichtung des elektronischen Schlüssels federnd, in der Ausnehmung gelagert ist, wobei dieser in der unbetätigten Stellung nicht über das einsteckseitige Schlüsselgehäuse herausragt, bei Betätigung von der Einsteckseite des Notschlüssels aus der gegenüberliegenden Schlüsselgehäusefläche austritt und das Sperrelement in eine Entsperrposition überführt.

Das Betätigungselement wird somit immer mit dem Schlüssel mitgeführt und vereinfacht die Handhabung im Notfall.

Vorzugsweise ist vorgesehen, dass die Ausnehmung oder der Betätigungsstift in der Normalstellung vom Griffteil des Notschlüssels abgedeckt ist und der Notschlüssel zur Betätigung aus dem elektronischen Schlüssel entnommen werden muß.
Somit ist diese notwendige Ausnehmung von außen nicht störend sichtbar.

Vorzugsweise ist vorgesehen, dass die Ausnehmung zur Durchführung des Betätigungselementes im elektronischen Schlüssel im Normalfall auf der der Einsteckfläche gegenüberliegenden Fläche mit einer Abdeckung versehen ist.
Somit ist die Ausnehmung auch gegen Eindringen von Schmutz im Betrieb geschützt.

Durch die vorzugsweisen Ausgestaltungen der Erfindung ist eine preiswerte Möglichkeit gegeben eine Notentnahmemöglichkeit eines elektronischen Schlüssels zu realisieren. Es müssen keine gesonderten Schaltelement mit ihrer Mechanik im Bereich des Armaturenbretts berücksichtigt werden und besonderer Montageaufwand betrieben werden, was sich im wesentlichen auf die Kosten auswirkt, im Besonderen bei der Massenherstellung von Kraftfahrzeugen. Die Bedienoberflächen können unauffällig gestaltet werden, da ohnehin vorhandene Ausnehmungen mit ihren Abdeckungen genutzt werden.
Die gesonderte erzwungene Handhabung einer Notentriegelung mittels separater Werkzeuge vermeidet versehentliche Betätigungen und damit verbundene Fehlbedienungen.

In den Zeichnungen ist die Erfindung schematisch in zwei Ausführungsbeispielen dargestellt.

Es zeigen:
- Fig. 1:: eine perspektivische Ansicht einer solchen Vorrichtung als eine Baueinheit.
- Fig. 2:: einen Schnitt durch eine Vorrichtung zum Starten eines Fahrzeugmotors A-A
- Fig.3:: eine teilweise geschnittene Seitenansicht entlang B-B in gesperrter Stellung
- Fig.4:: eine teilweise geschnittene Seitenansicht entlang B-B in entsperrter Stellung
- Fig.5:: Draufsicht auf einen elektronischen Schlüssel mit Notschlüssel mit teilweisem Schnitt
- Fig.6:: Draufsicht auf einen elektronischen Schlüssel mit separatem Betätigungselement
- Fig.7:: Draufsicht auf einen elektronischen Schlüssel mit stiftförmigem eingesetztem Betätigungselement in den teilweisen Schnitt

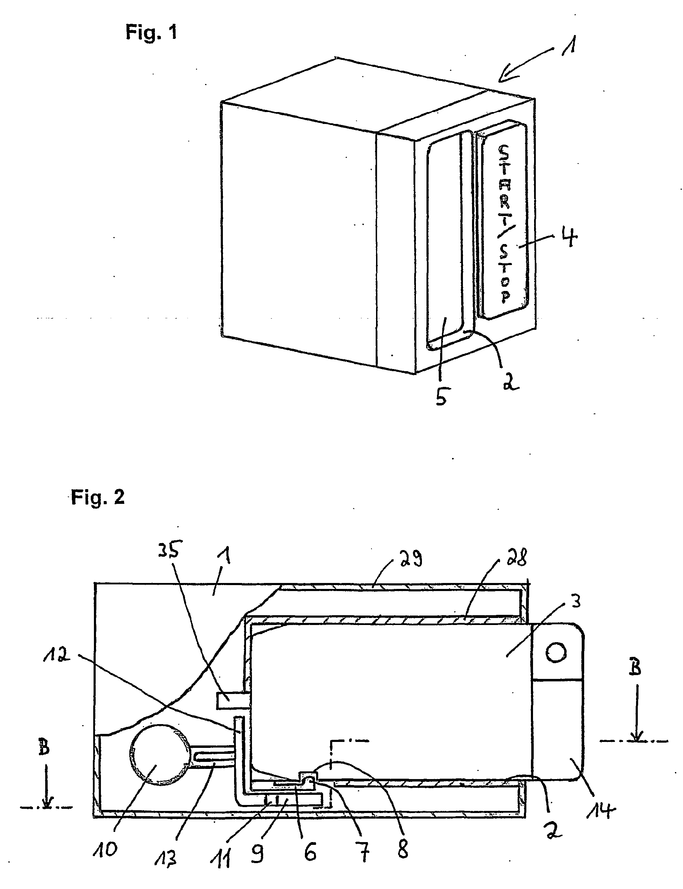

In Fig. 1 ist eine Baueinheit einer Vorrichtung 1 mit einer Aufnahme 2 für einen elektronischen Schlüssel 3 und einem integriertem Start-Stop-Schalter 4 dargestellt. Die Aufnahme 2 weist eine federbelastete Verschlußklappe 5 auf, die die Aufnahme 2 verschließt, sofern kein Schlüssel 3 eingesteckt ist, damit kein Schmutz oder Feuchtigkeit eindringen kann. Durch Einstecken des Schlüssels 3 wird die Klappe 5 gegen die Federkraft weggeklappt.

Bei eingestecktem Schlüssel 3 und nach erfolgter positiver Authentifizierung des elektronischen Schlüssels 3 kann durch Betätigen der Start-Stop-Taste 4 der Motor gestartet und nach wiederholter Betätigung gestoppt werden.
Zur Authentifizierung des Schlüssels 3 enthält dieser Sende und Empfangseinheiten, die mit der Steuereinheit ein oder mehrere Codes austauschen.
Diese Vorrichtung 1 kann an beliebiger Stelle im Innenraum des Fahrzeuges, vorzugsweise an der Armaturentafel, integriert sein.

In Fig. 2 ist die Vorrichtung 1 schematisch im Schnitt dargestellt, wobei nur der Verriegelungsmechanismus in seiner gesperrten Stellung gezeigt wird.
Der elektronische Schlüssel 3 ist in die Aufnahme 2 in seine Endstellung eingeschoben. Sensoren (35) zeigen dem Steuergerät des Fahrzeuges an, dass der Schlüssel 3 sich in seiner Endstellung bzw. Funktionsstellung befindet, woraufhin die Steuereinheit den Code des Schlüssels 3 abfragt. Nach erfolgter positiver Authentisierung und Betätigung des Start-Stop-Tasters 4 wird parallel zum Starten des Motors der Schlüssel 3 in der Aufnahme 2 gegen Entnahme verriegelt. Ein Federelement 6 mit einer Schulter 7 schnappt schon beim Einschieben in eine Tasche 8 des Schlüssels 3. Ein Sperrelement 9 wird dann durch einen Hubmagneten 10 vor das Federelement 6 gedreht, so dass das Federelement 9 nicht mehr in seine zweite Lage federn kann und der Schlüssel 3 über die in die Tasche 8 ragende Schulter 7 am Herausziehen gehindert ist.
Die Verriegelung erfolgt vor dem Hintergrund, dass das Fahrzeug nicht ohne eingesteckten Schlüssel 3 bewegt werden darf. Eine Freigabe des Schlüssels 3 durch Schaltung des Hubmagneten 10, durch Ansteuerung von der Steuereinheit der Fahrzeuges, erfolgt erst, wenn der Motor wieder abgeschaltet. Alternativ kann die Freigabe des Schlüssels 3 auch dann erfolgen, wenn bei stehendem Fahrzeug, wo die Räder sich nicht mehr drehen, aber der Motor noch eingeschaltet ist. Auch dies wird von der elektrischen Steuereinheit registriert. Bei abgezogenem Schlüssel 3 und laufendem Motor wird über die Steuereinheit ein Fahren des Fahrzeuges blockiert. Dadurch werden Fehlbedienungen durch einen entnommenen Schlüssel 3 vermieden, zudem ist gewährleistet, dass das Fahrzeug nur mit einem zugelassenen Schlüssel 3 betrieben werden kann. Die Blockierung des Schlüssels 3 ist auch für andere Betriebssituationen denkbar.

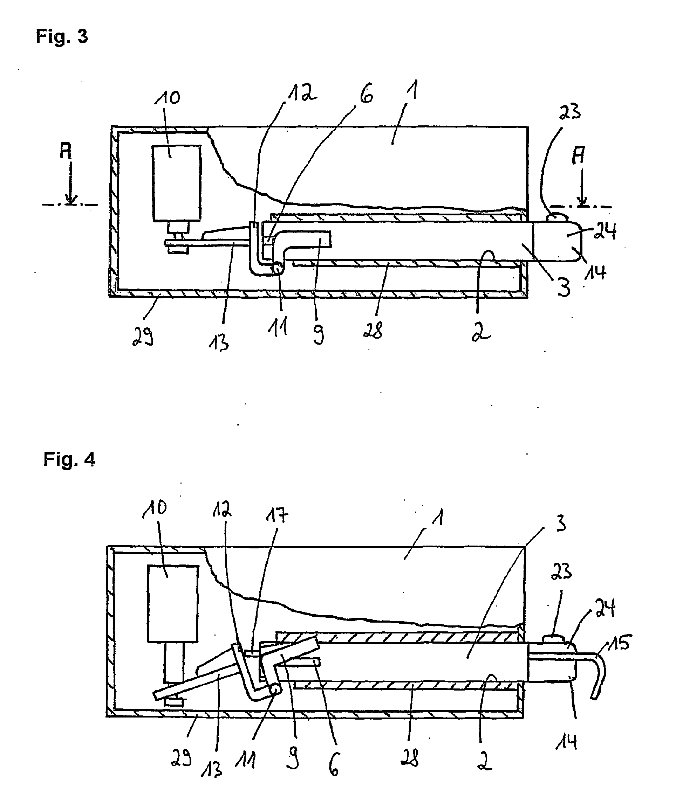

In Fig. 3 ist die Aufnahme 2 schematisch in der verriegelten Stellung im Schnitt B-B dargestellt. Das Sperrelement 9 ist um die Gelenkachse 11 kippbeweglich gelagert und einteilig mit einer Betätigungsplatte 12 und einem Betätigungshebel 13 verbunden.

In der Normalfunktion wird das Sperrelement 9,12,13 mittels des Hubmagneten 10 durch Ansteuerung von der Steuereinheit von der verriegelten Stellung wie in Figur 3 dargestellt in die entriegelte Stellung, wie sie der in Figur 4 entspricht, überführt.
Der Hubmagnet 10 ist dabei ein bistabiler Hubmagnet 10.
Der elektronische Schlüssel 3 ragt in seine Betriebsposition aus der Aufnahme 2 mit seinem Griffende/Schlüsselkopf 14, 24 heraus.

In Figur 4 ist die Notfunktion dargestellt, wobei durch das Betätigungselement 15 für den Notfall, wenn der Hubmagnet 10 aufgrund eines Schadens oder wegen Stromausfalls nicht mehr von der Steuereinheit aktiviert werden kann, das Sperrelement 9 in die Entsperrposition überführt wurde. Dabei wird vom Bediener das Betätigungselement durch eine Ausnehmung 16 im Schlüssel 3 hindurch geschoben, um dann mit den Drahtende 17 gegen die Betätigungsplatte 12 zu stoßen und diese mitsamt dem Sperrelement 9 um die Gelenkachse 11 zu bewegen.
Das Federelement 6 wird frei und die Schulter 7 kann bei Herausnahme des Schlüssels 3 ausweichen.
Der Schlüssel 3 kann aus der Aufnahme 2 entnommen werden.

In alternativen Ausführungsformen, die nicht bildlich dargestellt ist, ist der Schlüssel 3 in Einschublage gegen eine Feder vorgespannt, so dass nach Entriegelung der Schlüssel 3 durch die Federkraft aus der Aufnahme 2 herausgeworfen wird.

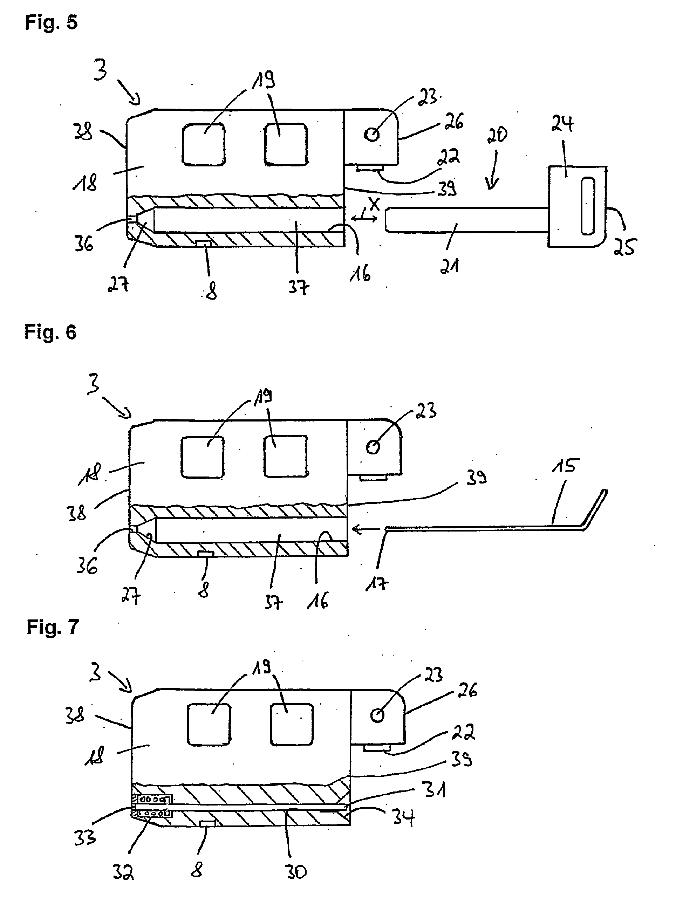

In Figur 5 ist ein elektronischer Schlüssel 3 im Teilschnitt dargestellt. Der Schlüssel 3 weist ein Schlüsselgehäuse 18 auf in dem Schalttasten 19 integriert sind, mit denen mittels Funkübertragung Fernbedienungsfunktionen ausgelöst werden können, wie z.B. das fernbediente Entriegeln/Verriegeln der Schließanlage des Fahrzeuges oder Öffnen der Fenster.
Des weiteren weist der Schlüssel 3 einen Notschlüssel 20 auf, der mit seinem kodierten Schlüsselschaft 21 in eine Ausnehmung 16 des elektronischen Schlüssels 3 eingeschoben ist. Der Notschlüssel dient zur Notöffnung des Fahrzeuges über einen am Fahrzeug angebrachten Schließzylinder bei Totalausfall der Steuereinheit, damit der Zugang zum Fahrzeug zur Schadensbeseitung gewährleistet ist.
In der Normalposition ist der Schlüsselschaft 21 in der Ausnehmung 16 eingeschoben und über einen Riegel 22, der über eine Taste 23 betätigt wird, der mit dem Schlüsselkopf 24 zusammen wirkt, verriegelt. Der Schlüsselkopf 24 schließt mit seiner Kopffläche 25 bündig mit der Kopffläche 26 des elektronischen Schlüssels ab.

Um bei Ausfall des Hubmagneten 10 den elektronischen Schlüssel 3 trotz aktiver Sperre entnehmen zu können, bedient man sich der Ausnehmung 16. Dazu wird der Notschlüssel 20 aus dem Schlüssel 3 entfernt.
Zur Entnahme des Notschlüssels 20 wird die Taste 23 gedrückt und der Schlüssel 20 gleichzeitig herausgezogen. Danach ist die Ausnehmung 16 zugänglich. Ein wie in Figur 6 dargestelltes drahtförmiges Betätigungselement 15 wird in gemäß Figur 6 dargestellte Richtung x in die Ausnehmung 16 geführt und fädelt sich über einen trichterförmigen Abschnitt 27 in eine Bohrung 36 ein und wird somit zentriert auf die Betätigungsplatte 12 geführt. Die Zentrierung erleichtert das Treffen der Betätigungsplatte 12, insbesondere wenn das Betätigungselement 15 durch Zwischenwände 28 im Gehäuse 29 der Vorrichtung 1 geführt werden muß.
Das drahtförmige Element 15 kann im Handschuhfach des Fahrzeuges deponiert werden. Es ist allerdings auch möglich alternative Gegenstände wie zurechtgebogene Büroklammern zur Betätigung zu verwenden.

In Figur 7 ist eine alternative Ausführungsform dargestellt. Dabei ist im elektronischen Schlüssel 3 in einer Ausnehmung 30 ein Betätigungsstift 31 verschieblich gelagert. Die Ausnehmung 30 liegt parallel zur Ausnehmung 16, die als Aufnahme des Notschlüssels 20 dient. Der Betätigungsstift 31 ist über Federelemente 32 entgegengesetzt zur Einschubrichtung des Schlüssels 3 in die Aufnahme 2 vorgespannt.
Zur Notbetätigung wird der Notschlüssel 20 wie oben beschrieben entnommen, um dann mittels eines Werkzeuges, wie einem Kugelschreiber oder mit den Fingerspitzen den Betätigungsstift 31 in Einschubrichtung des Schlüssels 3 in eine Vertiefung 34 zu bewegen, so daß das Stiftende 33 aus dem Schlüsselgehäuse 29 heraustritt und die dahinter angebrachte Betätigungsplatte 12 trifft und in die Entriegeltposition bewegt. Danach ist der elektronische Schlüssel 3 aus der Aufnahme 2 entnehmbar.

Alternativ besteht die Möglichkeit die Ausnehmungen 16, 30, insbesondere wenn kein Notschlüssel 20 vorhanden ist, durch separate Abdeckungen gegen Eindringen von Verschmutzungen zu schützen und zu kaschieren. Die Bedienoberfläche des elektrischen Schlüssel 3 und/oder des Armaturenbretts kann so ohne störende Elemente wie Löcher gestaltet werden.

Weiterhin ist alternativ möglich, was nicht bildlich dargestellt ist, das Sperrelement 9 als Schiebeelement auszuführen, das direkt an einen Hubmagneten 10 angekoppelt wird. An das Schiebeelement ist eine entsprechende Betätigungsplatte 12 angeflanscht oder einteilig mit dieser ausgeführt, auf die das Betätigungselement 15 im Notfall wirken kann, um das Sperrelement 9 in die Entriegelt-Position zu schieben.

## Patentansprüche

1. Vorrichtung zum Starten eines Fahrzeugmotors mittels eines elektronischen Schlüssels (3) der gegebenenfalls ein Scheckkarten-Format aufweist, mit einer zum Einstecken des Schlüssels (3) dienenden Aufnahme im Fahrzeug, wobei der in der Aufnahme eingesteckte Schlüssel unverdrehbar und mindestens in eine definierte Hublage längsverschiebbar ist, wobei die Schlüsselhublage von Sensoren einer Steuereinheit überwacht und zur Steuerung von verschiedenen Funktionen des Motors genutzt werden und der Schlüssel (3) in einer bestimmten Hublage mittels Sperrelemente (9) die durch einen elektrischen Antrieb (10) gesteuert werden, gegen Entnahme aus der Aufnahme gesichert ist,
**dadurch gekennzeichnet, dass** die Vorrichtung (1) Mittel aufweist, die eine Entnahme des elektronischen Schlüssels (3) bei Ausfall des elektrischen Antriebes (10) ermöglichen.

2. Vorrichtung nach Anspruch 1 **dadurch gekennzeichnet, dass** das durch den elektrischen Antrieb (10) betätigte Sperrelement (9) einen Hebel und / oder Betätigungsflächen (12,13) aufweist, auf die ein durch eine Ausnehmung (16) des elektronischen Schlüssels (3) geführtes Betätigungselement (15) bei Betätigung im Notfall wirkt, so dass mit diesem Element (15) das Sperrelement (9) manuell in eine Entsperrposition bewegt werden kann.

3. Vorrichtung nach Anspruch 1 oder 2 **dadurch gekennzeichnet, dass** ein Start-Stop-Taster (4) mit der Aufnahme (2) für den elektrischen Schlüssel (3) eine Baueinheit bildet.

4. Vorrichtung nach einem der vorhergehenden Ansprüche **dadurch gekennzeichnet, dass** der elektrische Antrieb (10) zur Aktivierung/Deaktivierung des Schlüsselsperrelementes (9) ein Hubmagnet (10) ist.

5. Vorrichtung nach einem der vorhergehenden Ansprüche **dadurch gekennzeichnet, dass** der elektrische Antrieb (10) zur Aktivierung/Deaktivierung des Schlüsselsperrelementes (9) ein Elektromotor ist.

6. Vorrichtung nach einem der vorhergehenden Ansprüche **dadurch gekennzeichnet, dass** der in der Aufnahme (2) eingesteckte elektronische Schlüssel (3) mindestens zwischen zwei zueinander axial versetzte Hublagen längsverschiebbar ist, wobei die unterschiedlichen Schlüsselhublagen von Sensoren (35) einer Steuereinheit überwacht und zur Steuerung von verschiedenen Funktionen des Motors oder des Fahrzeuges genutzt werden.

7. Vorrichtung nach einem der vorhergehenden Ansprüche **dadurch gekennzeichnet, dass** das Betätigungselement (15) zur Notbetätigung ein drahtförmiges Teil ist.

8. Elektronischer Schlüssel zur Verwendung in einer Vorrichtung nach einem der vorhergehenden Ansprüche **dadurch gekennzeichnet, dass** der Schlüssel (3) in Einschubrichtung eine durchgehende Ausnehmung (16) aufweist zur Durchführung oder Aufnahme eines Betätigungselementes (15).

9. Elektronischer Schlüssel nach Anspruch 8 **dadurch gekennzeichnet, dass** die Ausnehmung (16) trichterförmig in eine Bohrung (36) mündet, so daß das durchzuführende drahtförmiges Betätigungselement (15) zentriert durch die Bohrung (36) geführt werden kann, um das Sperrelement in die Entsperrposition zu betätigen.

10. Elektronischer Schlüssel nach einem der Ansprüche 8 oder 9 **dadurch gekennzeichnet, dass** die Ausnehmung (16) aus dem Aufnahmeschacht (37) des Notschlüssels (20) gebildet wird.

11. Elektronischer Schlüssel nach Anspruch 8 **dadurch gekennzeichnet, dass** ein Betätigungsstift (31), entgegengesetzt zur Einschubrichtung des elektronischen Schlüssels (3), federnd in der Ausnehmung (30) gelagert ist, wobei dieser in der unbetätigten Stellung nicht über das einsteckseitige Schlüsselgehäuse (38) herausragt, bei Betätigung von der Einsteckseite des Notschlüssels (10) aus der gegenüberliegenden Schlüsselgehäusefläche (38) austritt und das Sperrelement (9) in eine Entsperrposition überführt.

12. Elektronischer Schlüssel nach einem der Ansprüche von 8 bis 11 **dadurch gekennzeichnet, dass** die Ausnehmung (16) oder der Betätigungsstift (31) in der Normalstellung vom Schlüsselkopf (24) des Notschlüssels (20) abgedeckt ist und der Notschlüssel (20) zur Betätigung aus dem elektronischen Schlüssel (3) entnommen werden muß.

13. Elektronischer Schlüssel nach Anspruch 8, 9 oder 11 **dadurch gekennzeichnet, dass** die Ausnehmung (16) zur Durchführung des Betätigungselementes (15) im elektronischen Schlüssel (3) im Normalfall auf der der Einsteckfläche (38) gegenüberliegenden Fläche (39) mit einer Abdeckung versehen ist.

## Claims

1. A device for starting a vehicle engine by means of an electronic key, which may also be in the check card format, comprising a receiving device in the vehicle for inserting the key, with the key, when inserted in the receiving device, being unable to be rotated and being moveable in a longitudinal direction into at least one defined raised position, with the raised position of the key being monitored by sensors of a control unit and, being used to control various functions of the engine, and the key, when in a specific raised position being secured against removal from the receiving device by locking elements controlled by an electric drive,
**characterized in that** the mechanism (1) has means that enable the electronic key (3) to be removed in the event of failure of the electric drive (10).

2. The device according to claim 1, **characterized in that** the locking element (9) actuated by the electric drive (10) has a lever and/or actuating surfaces (12, 13), on which an actuating element (15) moving in a recess (16) in the electronic key (3) acts, when actuated in an emergency, so that the locking element (9) can be moved manually to an unlocking position by means of this element (15).

3. The device according to claim 1 or 2, **characterized in that** a start/stop button (4) forms a unit together with the receiving device (2) for the electric key (3).

4. The device according to one of the preceding claims, **characterized in that** the electric drive (10) for activating/deactivating the key locking element (9) is a solenoid (10).

5. The device according to one of the preceding claims, **characterized in that** the electric drive (10) for activating/deactivating the key locking element (9) is an electric motor.

6. The device according to one of the preceding claims, **characterized in that** the electronic key (3) inserted into the receiving device (2) can be moved longitudinally between two axially offset raised positions, with the different raised positions of the key being monitored by sensors (35) of a control unit and being used to control various functions of the engine or of the vehicle.

7. The device according to one of the preceding claims, **characterized in that** the actuating element (15) for emergency actuation is a wire-shaped part.

8. The electronic key for use in a device according to one of the preceding claims, **characterized in that** the key (3) has a continuous recess (16) in the direction of insertion for guiding through or receiving an actuating element (15).

9. The electronic key according to claim 8, **characterized in that** the recess (16) leads in a funnel shape into a bore (36) so that the wire-shaped actuating element (15) to be passed through can be guided centrally through the bore (36) in order to actuate the locking element into the unlocking position.

10. The electronic key according to one of claims 8 or 9, **characterized in that** the recess (16) is formed from the receiving slot (37) of the emergency key (10).

11. The electronic key according to claim 8, **characterized in that** an actuating pin (31) is supported in the recess (30), spring loaded counter to the direction of insertion of the electronic key (3), wherein in the unactuated position it does not project beyond the insertion side of the key housing (38) and when actuated from the insertion side of the emergency key (10) it projects from the opposite surface of the key housing (38) and moves the locking element (9) to an unlocking position.

12. The electronic key according to one of claims 8 to 11, **characterized in that** the recess (16) or the actuating pin (31) is covered when the key head (24) of the emergency key (20) is in the normal position and the emergency key (20) has to be removed from the electronic key (3) for actuation.

13. The electronic key according to claim 8, 9 or 11, **characterized in that** the recess (16) for guiding through the actuating element (15) in the electronic key (3) is normally provided with a cover on the surface (39) opposite the insertion side (38).

## Revendications

1. Dispositif pour le démarrage d'un moteur de véhicule au moyen d'une clé électronique (3), qui possède éventuellement un format de chéquier électronique, avec une admission servant à l'insertion de la clé (3) à l'intérieur du véhicule, la clé insérée dans l'admission ne pouvant pas être tournée et pouvant être déplacée dans la longueur dans au moins une position de levage définie, la position de levage étant surveillée par des détecteurs d'une unité de commande et étant utilisée pour la commande de différentes fonctions du moteur, et la clé (3) étant, dans une certaine position de levage, sécurisée contre le retrait hors de l'admission, au moyen d'éléments de verrouillage (9) actionnés par un système de commande électrique (10),
**caractérisé en ce que** le dispositif (1) comporte des moyens permettant un retrait de la clé électronique (3) en cas de panne du système de commande électrique (10).

2. Dispositif selon la revendication 1, **caractérisé en ce que** l'élément de verrouillage (9) activé par le système de commande électrique (10) comporte un levier et/ou des surfaces d'actionnement (12, 13), sur lesquelles agit un élément d'actionnement (15) introduit dans un évidement (16) de la clé électronique (3), lors d'un actionnement en cas d'urgence, de façon à ce que l'élément de verrouillage (9) puisse être déplacé manuellement dans une position de déverrouillage avec cet élément (15).

3. Dispositif selon la revendication 1 ou 2, **caractérisé en ce qu'**une touche marche-arrêt (4) forme une unité de construction avec l'admission (2) destinée à la clé électronique (3).

4. Dispositif selon l'une des revendications précédentes, **caractérisé en ce que** le système de commande électrique (10) pour l'activation/désactivation de l'élément de verrouillage de clé (9) est un aimant de levage (10).

5. Dispositif selon l'une des revendications précédentes, **caractérisé en ce que** le système de commande électrique (10) pour l'activation/désactivation de l'élément de verrouillage de clé (9) est un moteur électrique.

6. Dispositif selon l'une des revendications précédentes, **caractérisé en ce que** la clé électronique (3) insérée dans l'admission (2) peut être déplacée dans la longueur au moins entre deux positions de levage axialement décalées l'une par rapport à l'autre, les différentes positions de levage de la clé étant surveillées par des détecteurs (35) d'une unité de commande et étant utilisées pour la commande de différentes fonctions du moteur ou du véhicule.

7. Dispositif selon l'une des revendications précédentes, **caractérisé en ce que** l'élément d'actionnement (15) pour l'actionnement de secours est une pièce en forme de fil de fer.

8. Clé électronique pour l'utilisation dans un dispositif selon l'une des revendications précédentes, **caractérisé en ce que** la clé (3) comporte un évidement continu (16) dans le sens d'insertion, pour l'introduction ou l'admission d'un élément d'actionnement (15).

9. Clé électronique selon la revendication 8, **caractérisé en ce que** l'évidement (16) débouche en forme d'entonnoir dans un perçage (36), de façon à ce que l'élément d'actionnement (15) en forme de fil de fer à introduire puisse être introduit de manière centrée dans le perçage (36), afin de mettre l'élément de verrouillage dans la position de déverrouillage.

10. Clé électronique selon l'une des revendications 8 ou 9, **caractérisé en ce que** l'évidement (16) est formé dans le compartiment d'admission (37) de la clé de secours (20).

11. Clé électronique selon la revendication 8, **caractérisé en ce qu'**une tige d'actionnement (31) est disposée dans l'évidement (30) avec un effet de ressort, dans le sens opposé par rapport au sens d'insertion de la clé électronique (3), celle-ci ne dépassant pas de la boîte de clé (38) du côté d'insertion en position de non actionnement, et sortant de la surface opposée de la boîte de clé (38) lors de l'actionnement du côté d'insertion de la clé de secours (10), tout en déplaçant l'élément de verrouillage (9) dans une position de déverrouillage.

12. Clé électronique selon l'une des revendications 8 à 11, **caractérisé en ce que** l'évidement (16) ou la tige d'actionnement (31) sont recouverts dans la position normale de la tête de clé (24) de la clé de secours (20), et **en ce que** la clé de secours (20) doit être retirée de la clé électronique (3) pour l'actionnement.

13. Clé électronique selon la revendication 8, 9 ou 11, **caractérisé en ce que** l'évidement (16) destiné à l'introduction de l'élément d'actionnement (15) dans la clé électronique (3) est, dans le cas normal, pourvu d'un cache sur la surface (39) opposée à la surface d'insertion (38).
